# EUROPEAN PATENT APPLICATION

(11) **EP 2 259 165 A2**
(43) Date of publication of application: **08.12.2010**
(21) Application number: 10160071.6
(22) Date of filing: 15.04.2010
(51) Int. Cl.: G06F 1/32

(54) **State discriminant apparatus and method**

(30) Priority: 02.06.2009 JP 2009132628; 08.04.2010 JP 2010089713
(71) Applicant: Onkyo Corporation, Neyagawa-shi, Osaka 572-8540 (JP)
(72) Inventor: Shimozawa, Dai, Neyagawa-shi Osaka 572-8540 (JP); Ohta, Kazutaka, Neyagawa-shi Osaka 572-8540 (JP)
(74) Representative: Patentship

(57) **Abstract**

During the charging of an electronic device (11), a first control unit (2) is usually in the low-power consumption state, and the first control unit (2) makes the transition to the normal state every predetermined time to discriminate the charging state of the electronic device through a second control unit (3). When the electronic device (11) is still being charged, the first control unit (2) repeats an operation for returning to the low-power consumption state. Accordingly, the power consumption of the first control unit (2) can be reduced during the charging of the electronic device (11).

## Description

### BACKGROUND OF THE INVENTION

### 1. FIELD OF THE INVENTION

The present invention relates to a state discriminant apparatus that discriminates a charging state of an electronic device.

### 2. DESCRIPTION OF THE RELATED ART

Currently, a portable player including an HDD or a flash memory has become widespread. The portable player also includes a battery unit. When a portable player is connected to a battery charger, a power-supply voltage is supplied from a battery charger to charge the battery unit. The battery charger includes a main microcomputer and a sub-microcomputer. The main microcomputer controls each unit of the battery charger such that an operating state of the sub-microcomputer is controlled. The sub-microcomputer conducts communication with a microcomputer of the portable player. Each of the main microcomputerandthesub-microcomputerhasanormalstate and a low-power consumption state as the operating state. In the normal state, the main microcomputer and the sub-microcomputer can perform the operation. In the low-power consumption state, the main microcomputer and the sub-microcomputer stop the operation to reduce power consumption. The sub-microcomputer makes a transition to the normal state or the low-power consumption state in response to an instruction from the main microcomputer.

Because the main microcomputer and the sub-microcomputer maintain the normal state during charging of the portable player, the power consumption of the main microcomputer cannot be reduced. That is, the main microcomputer maintains the normal state during the charging of the portable player, and discriminates whether the portable player is still being charged or the portable player has been completely charged. This is because the main microcomputer needs to control a power circuit of the battery charger or the operating state of the sub-microcomputer depending on the result.

Particularly, during the charging of the portable player, the main microcomputer transmits an instruction to confirm the charging state of the portable player to the sub-microcomputer every predetermined time. In response to the instruction from the main microcomputer, the sub-microcomputer conducts communication with the microcomputer of the portable player to confirm the charging state of the portable player, and sends back charging state information to the main microcomputer. When the portable player has completed charging, the main microcomputer transmits an instruction for making a transition to the low-power consumption state to the sub-microcomputer, and the main microcomputer also makes the transition to the low-power consumption state. This is because the main microcomputer needs not conduct communication with the portable player in order to confirm the charging state of the portable player. The sub-microcomputer makes the transition from the normal state to the low-power consumption state in response to the instruction from the main microcomputer. As described above, during the charging of the portable player, there is a problem in that the power consumption cannot be reduced because the main microcomputer and the sub-microcomputer are in the normal state.

### SUMMARY OF THE INVENTION

An object of the present invention is to provide a state discriminant apparatus including a second control unit that confirms a charging state of an electronic device and a first control unit that controls an operating state of the second control unit in order to be able to reduce power consumption of the first control unit during charging of the electronic device.

According to a preferred embodiment of the present invention, a state discriminant apparatus that discriminates a charging state of an electronic device comprises: a first control unit; and a second control unit. The first control unit and the second control unit have a normal state and a low-power consumption state as operating states, the first control unit includes: a means for causing the first control unit to make a transition from the low-power consumption state to the normal state when a predetermined time has elapsed; a transmitting means for transmitting an instruction for confirming the charging state of the electronic device to the second control unit in the normal state; a determining means for determining whether the electronic device has completed charging based on charging state information sent back from the second control unit; and a means for causing the first control unit to make the transition from the normal state to the low-power consumption state when the determining means has determined that the electronic device is still being charged. The second control unit includes a means for confirming the charging state of the electronic device to send back the charging state information to the first control unit in the normal state in response to the instruction for confirming the charging state of the electronic device from the first control unit.

According to the present invention, during the charging of the electronic device, the first control unit is usually in the low-power consumption state, and the first control unit makes the transition to the normal state every predetermined time to discriminate the charging state of the electronic device through the second control unit. When the electronic device is still being charged, the first control unit repeats an operation for returning to the low-power consumption state. Accordingly, the power consumption of the first control unit can be reduced during the charging of the electronic device. The first control unit may further comprise a means for determining whether a predetermined time has elapsed since a transition from the normal state to the low-power consumption state is made.

Moreover, the first control unit may further comprise a means for causing the first control unit to make the transition to the low-power consumption state after the transmitting means has transmitted to the second control unit an instruction for making the transition to the low-power consumption state, when the determining means has determined that the electronic device has completed charging.

Furthermore, the second control unit may further comprise a means for causing the second control unit to make the transition from the normal state to the low-power consumption state in response to an instruction for making the transition to low-power consumption state from the first control unit.

Preferably, the second control unit confirms a charging information relating to currently charged amount of the electronic device and sends the charging information to the first control unit in response to the instruction from the first control unit, and the first control unit further includes a means that decides the predetermined time based on the charging information received from the second control unit.

The state discriminant apparatus may be for example a battery charger that is adapted to charge a battery unit of the electronic device.

A corresponding method for discriminating a charging state of an electronic device with a state discriminant apparatus comprising a first control unit and a second control unit, wherein the first control unit and the second control unit have a normal state and a low-power consumption state as operating states, comprises:
a step of causing the first control unit to make a transition from the low-power consumption state to the normal state when a predetermined time has elapsed;
a step in which the first control unit transmits an instruction for confirming the charging state of the electronic device to the second control unit in the normal state;
a step in which the second control unit confirms the charging state of the electronic device to send back the charging state information to the first control unit in the normal state in response to the instruction for confirming the charging state of the electronic device from the first control unit;
a step in which the first control unit determines whetherthe electronic device has completed charging based on charging state information sent back from the second control unit; and
a step of causing the first control unit to make the transition from the normal state to the low-power consumption state when it has been determined that the electronic device is still being charged.

With this method, similar advantageous effects as with the above-described apparatus can be attained.

The method may further comprise a step in which the first control unit determines whether a predetermined time has elapsed since a transition from the normal state to the low-power consumption state is made.

The method may further comprise a step in which the first control unit makes the transition to the low-power consumption state after an instruction for making the transition to the low-power consumption state has been transmitted to the second control unit, when the determining means has determined that the electronic device has completed charging.

The method may further comprise a step in which the second control unit makes the transition from the normal state to the low-power consumption state in response to an instruction for making the transition to low-power consumption state from the first control unit.

The method may further comprise a step in which the second control unit confirms a charging information relating to the currently charged amount of the electronic device and sends the charging information to the first control unit, and a step in which the first control unit decides the predetermined time based on the charging information received from the second control unit.

### BRIEF DESCRIPTION OF THE DRAWINGS

FIG. 1 is a block diagram illustrating a battery charger 1 according to a preferred embodiment of the present invention and a portable player 11;
FIG. 2 is a flowchart illustrating processes of a main microcomputer 2 and a sub-microcomputer 3;
FIG. 3 illustrates a predetermined time table; and
FIG. 4 is a flowchart illustrating the processes of the main microcomputer 2 and the sub-microcomputer 3.

### DETAILED DESCRIPTION OF THE PREFERRED EMBODIMENTS

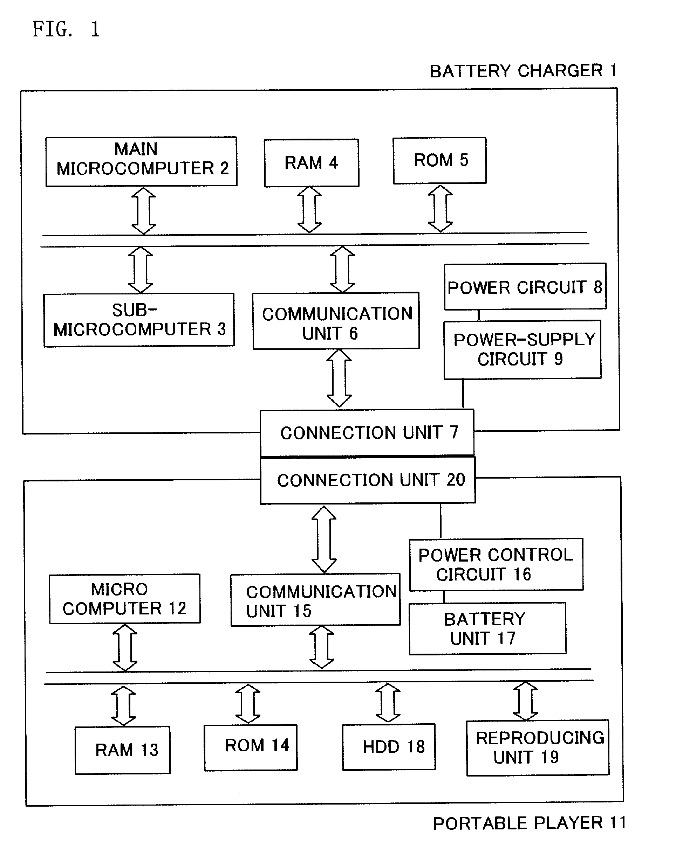

Preferred embodiments of the present invention will be specifically described below with reference to the drawings. However, the present invention is not limited to the embodiments. FIG. 1 is a block diagram illustrating a battery charger 1 according a preferred embodiment of the present invention and a portable player (electronic device, content reproducing device) 11.

The battery charger 1 charges a battery unit 17 of the portable player 11 by supplying a power-supply voltage to the portable player 11. The battery charger 1 mainly includes a main microcomputer 2, a sub-microcomputer 3, RAM 4, a ROM 5, a communication unit 6, a connection unit 7, a power circuit 8, and a power-supply circuit 9. The state discriminant apparatus of the present invention includes the main microcomputer (first control unit) 2 and the sub-microcomputer (second control unit) 3.

The main microcomputer 2 controls each unit of the battery charger 1. The main microcomputer 2 develops and executes a program of the main microcomputer 2 stored in the ROM 5 on the RAM 4, thereby performing each process described below. The main microcomputer 2 controls an operating state of the sub-microcomputer 3. That is, the main microcomputer 2 transmits to the sub-microcomputer 3 an instruction for making a transition to a normal state or an instruction for making a transition to a low-power consumption state. The main microcomputer 2 also transmits an instruction for confirming a charging state of the portable player 11 to the sub-microcomputer 3.

Operating states of the main microcomputer 2 and sub-microcomputer 3 will be described. The normal state and the low-power consumption state exist in the operating state. The normal state is a state in which the main microcomputer 2 or the sub-microcomputer 3 can perform the operation, for example, a state in which an oscillation circuit (not illustrated) supplies a clock to a main circuit in the microcomputer.

The low-power consumption state is a state in which the main microcomputer 2 or the sub-microcomputer 3 stops the operation to reduce power consumption lower than that of the normal state. The low-power consumption state is a state in which the oscillation circuit (not illustrated) does not supply the clock to the main circuit in the microcomputer.

During charging of the portable player 11, the main microcomputer 2 performs an intermittent operation in which the normal state and the low-power consumption state are repeated. Particularly, although the main microcomputer 2 is usually in the low-power consumption state during the charging of the portable player 11, the main microcomputer 2 makes the transition from the low-power consumption state to the normal state every predetermined time (for example, 10 seconds), and the main microcomputer 2 provides an instruction to confirm the charging state of the portable player 11 to the sub-microcomputer 3. The main microcomputer 2 then receives charging state information on the portable player 11 from the sub-microcomputer 3, and returns to the low-power consumption state when the portable player 11 is still being charged. Then the process is repeated after the predetermined time is elapsed again. On the other hand, when the portable player 11 has completed charging, the main microcomputer 2 makes the transition to the low-power consumption state after transmitting the instruction for making the transition to the low-power consumption state to the sub-microcomputer 3. Through the above processes, the main microcomputer 2 is mostly in the low-power consumption state during the charging of the portable player 11, and thereby the power consumption can be reduced.

The main microcomputer 2 monitors whether a connection unit 20 is connected to the connection unit 7 of the battery charger 1. When detecting that the connection unit 20 is connected to the connection unit 7 of the battery charger 1, the main microcomputer 2 controls the power-supply circuit 9 and the power circuit 8 such that a charging voltage is supplied to the portable player 11. When detecting that the portable player 11 has completed charging, the main microcomputer 2 controls the power-supply circuit 9 and the power circuit 8 such that the charging voltage is not supplied to the portable player 11.

The sub-microcomputer 3 conducts communication with a microcomputer 12 of the portable player 11. Particularly, when receiving the instruction for confirming the charging state of the portable player 11 from the main microcomputer 2, the sub-microcomputer 3 inquires of the microcomputer 12 of the portable player 11 about the charging state (during charging or completion of charging). The sub-microcomputer 3 sends back the charging state information to the main microcomputer 2 when receiving the charging state information from the microcomputer 12 of the portable player 11. That is, during the charging of the portable player 11, since the main microcomputer 2 transmits the instruction for confirming the charging state every predetermined time, the sub-microcomputer 3 inquires of the microcomputer 12 of the portable player 11 about the charging state information in each case, and the sub-microcomputer sends back the charging state information to the main microcomputer 2.

The sub-microcomputer 3 cannot change the operating state by itself, but changes the operating state in response to the instruction from the main microcomputer 2. That is, when receiving the instruction for making the transition to the low-power consumption state from the main microcomputer 2, the sub-microcomputer 3 makes the transition from the normal state to the low-power consumption state in response to the instruction. Similarly, when receiving the instruction for making the transition to the normal state from the main microcomputer 2, the sub-microcomputer 3 makes the transition from the low-power consumption state to the normal state in response to the instruction.

Particularly, during the charging of the portable player 11, since the sub-microcomputer 3 sends back the charging state information that the portable player 11 is being charged to the main microcomputer 2, the main microcomputer 2 does not transmit the instruction for making the transition to the low-power consumption state. Accordingly, the sub-microcomputer 3 maintains the normal state during the charging of the portable player 11. On the other hand, when the portable player 11 has completed charging, since the sub-microcomputer 3 sends back the charging state information that the portable player 11 has completed charging to the main microcomputer 2, the main microcomputer 2 transmits the instruction for making the transition to the low-power consumption state. Accordingly, the sub-microcomputer 3 makes the transition to the low-power consumption state after the portable player 11 has completed charging.

The communication unit 6 is an interface that conducts communication with the communication unit 15 of the portable player 11. The communication unit 6 transmits the instruction and information from the sub-microcomputer 3 to the communication unit 15 of the portable player 11, and supplies the instruction and information from the microcomputer 12 of the portable player 11 to the sub-microcomputer 3.

The connection unit 7 is a connector that connects the battery charger 1 and the connection unit 20 of the portable player 11. The connection unit 7 transmits and receives a control signal between the sub-microcomputer 3 and the microcomputer 12 to and from the connection unit 20. The connection unit 7 supplies the charging voltage produced by the power circuit 8 to the connection unit 20.

The power circuit 8 produces the charging voltage from a commercial alternating-current power-supply voltage and supplies the charging voltage to the power-supply circuit 9. The power-supply circuit 9 supplies the charging voltage from the power circuit 8 to the portable player 11 through the connection unit 7.

In the portable player 11, a reproducing unit 19 reads and reproduces contents (such as music data and video data) stored in an HDD 18. The portable player 11 mainly includes the microcomputer 12, the RAM 13, the ROM 14, a communication unit 15, a power control circuit 16, the battery unit 17, the HDD 18, and the reproducing unit 19.

The microcomputer 12 controls each unit of the portable player 11, and the microcomputer 12 develops and executes a program stored in the ROM 14 on the RAM 13, thereby performing each process. The microcomputer 12 always confirms the charging state (during charging or completion of charging) of the battery unit 17. When receiving an inquiry about the charging state from the sub-microcomputer 3 of the battery charger 1, the microcomputer 12 sends back the charging state information (during charging or completion of charging) to the sub-microcomputer 3.

The communication unit 15 is an interface that conducts communication with the communication unit 6 of the battery charger 1. The communication unit 15 transmits the instruction and information from the microcomputer 12 to the communication unit 6 of the battery charger 1, or transmits the instruction and information from the sub-microcomputer 3 of the battery charger 1 to the microcomputer 12.

The power control circuit 16 controls the power-supply voltage at the battery unit 17. The power control circuit 16 supplies the charging voltage, supplied from the battery charger 1, to battery unit 17 to charge the battery unit 17. The power control circuit 16 supplies the voltage charged in the battery unit 17 to each unit of the portable player 11.

The battery unit 17 charges the voltage in order to drive the portable player 11.

The connection unit 20 is a connector that connects the portable player 11 and the connection unit 7 of the battery charger 1. The connection unit 20 transmits and receives the control signal between the sub-microcomputer 3 and the microcomputer 12 to and from the connection unit 7. The connection unit 20 supplies the charging voltage produced by the power circuit 8 from the connection unit 7.

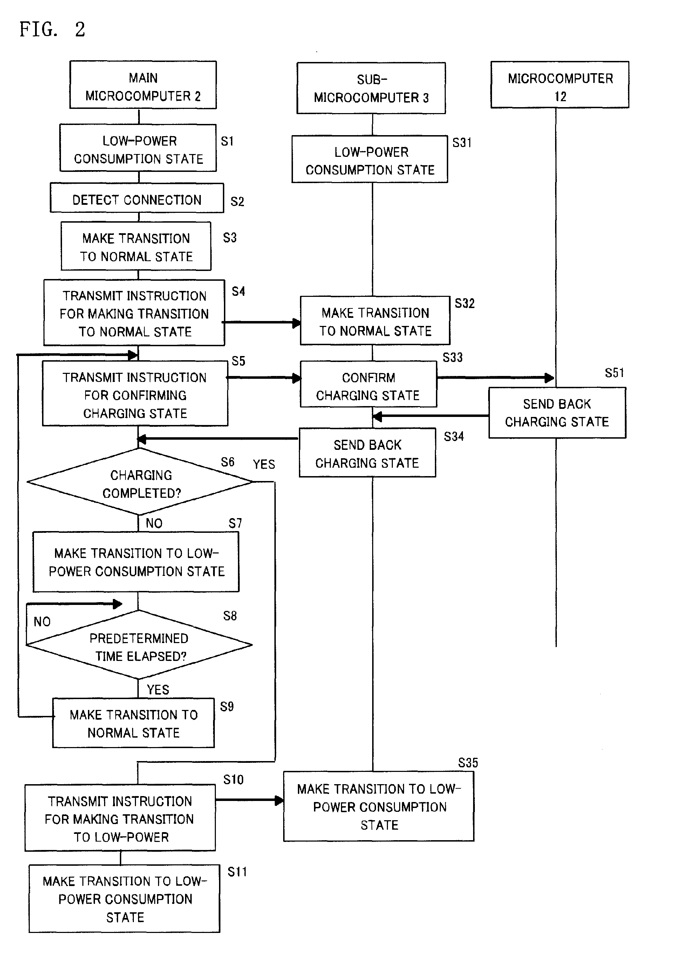

The processes of the main microcomputer 2, sub-microcomputer 3, and microcomputer 12 will be described with reference to FIG. 2.

When the portable player 11 is not connected to the battery charger 1, the main microcomputer 2 and the sub-microcomputer3areinthelow-powerconsumptionstate (S1 and S31). A user connects the portable player 11 to the battery charger 1 to charge the portable player 11. At this point, the main microcomputer 2 detects that the connection unit 20 of the portable player 11 is connected to the connection unit 7 (S2). Particularly, because the main microcomputer 2 is in the low-power consumption state, a connection detecting circuit (not illustrated) feeds an interruption signal into the main microcomputer 2. In response to the connection detection, the main microcomputer 2 makes the transition from the low-power consumption state to the normal state (S3).

The main microcomputer 2 controls the power circuit 8 and the power-supply circuit 9 such that the charging voltage is supplied to the battery unit 17 of the portable player 11. Therefore, the portable player 11 starts to charge the battery unit 17. Note that the microcomputer 12 always monitors the charging state (during charging or completion of charging) of the battery unit 17.

The main microcomputer 2 transmits the instruction for making the transition to the normal state to the sub-microcomputer 3 (S4). When receiving the instruction for making the transition to the normal state from the main microcomputer 2, the sub-microcomputer 3 makes the transition from the low-power consumption state to the normal state (S32). Then the sub-microcomputer 3 maintains the normal state until the sub-microcomputer 3 receives the instruction for making the transition to the low-power consumption state from the main microcomputer 2.

The main microcomputer 2 transmits the instruction for confirming the charging state of the portable player 11 to the sub-microcomputer 3 (S5). When receiving the instruction for confirming the charging state of the portable player 11 from the main microcomputer 2, the sub-microcomputer 3 transmits the inquiry about the charging state to the microcomputer 12 of the portable player 11 (S33). When receiving the inquiry about the charging state from the sub-microcomputer 3, the microcomputer 12 sends back the charging state information (during charging or completion of charging) to the sub-microcomputer 3 (S51). When receiving the charging state information from the microcomputer 12, the sub-microcomputer 3 sends back the charging state information to the main microcomputer 2 (S34).

When receiving the charging state information from the sub-microcomputer 3, the main microcomputer 2 determines whether the portable player 11 has completed charging based on the charging state information (S6). When the portable player 11 is still being charged (NO in S6), the main microcomputer 2 makes the transition from the normal state to the low-power consumption state (S7). When making the transition from the normal state to the low-power consumption state, the main microcomputer 2 starts counting of a timer using a built-in timer circuit, and the main microcomputer 2 determines whether a predetermined time (for example, 10 seconds) has elapsed since the main microcomputer 2 made the transition to low-power consumption state (for example, 10 seconds) (S8). That is, in the low-power consumption state, the main microcomputer 2 cannot control each unit of the battery charger 1, but can count the predetermined time. Since the main microcomputer 2 is in the low-power consumption state while the predetermined time elapses, the power consumption of the main microcomputer 2 can be reduced during the charging of the portable player 11.

When the predetermined time has elapsed since the main microcomputer 2 made the transition to the low-power consumption state (YES in S8), the main microcomputer 2 makes the transition from the low-power consumption state to the normal state (S9). The flow returns to S5, the main microcomputer 2 repeats the processes in S5 to S9 such that the instruction for confirming the charging state of the portable player 11 is transmitted to the sub-microcomputer 3. Since it is continuously determined as NO in S6 during the charging of the portable player 11, the main microcomputer 2 is usually in the low-power consumption state in which the power consumption is reduced, but the main microcomputer 2 continues to perform the following operation. That is, the main microcomputer 2 makes the transition from the low-power consumption state to the normal state every predetermined time (for example, 10 seconds), confirms the charging state of the portable player 11 through the sub-microcomputer 3, and returns to the low-power consumption state.

When determining that the portable player 11 has completed charging (YES in S6), the main microcomputer 2 transmits the instruction for making the transition to the low-power consumption state to the sub-microcomputer 3 (S10). The main microcomputer 2 controls the power circuit 8 and the power-supply circuit 9 such that the charging voltage is not supplied to the portable player 11. In response to the instruction for making the transition to the low-power consumption state from the main microcomputer 2, the sub-microcomputer 3 makes the transition from the normal state to the low-power consumption state (S35). Thereafter, the main microcomputer 2 also makes the transition from the normal state to the low-power consumption state (S11). Accordingly, after the portable player 11 has completed charging, the main microcomputer 2 and the sub-microcomputer 3 make the transition to the low-power consumption state, and maintain the low-power consumption state, thereby the power consumption can be reduced.

Accordingly, in the present embodiment, during the charging of the portable player 11, only the sub-microcomputer 3 maintains the normal state, the main microcomputer 2 is usually in the low-power consumption state, and the main microcomputer 2 becomes the normal state only when the main microcomputer 2 confirms the charging state of the portable player 11. Therefore, the power consumption of the main microcomputer 2 can be reduced.

The portable player 11 may send currently charged amount of the portable player 11 instead of the charging state. The main microcomputer 2 may determine the charging state based on the currently charged amount of the portable player 11. In this case, the main microcomputer 2 determines that the charging state of the portable player 11 is completion of charging if the currently charged amount of the portable player 11 is maximum value, and determines that the charging state of the portable player 11 is during charging if the currently charged amount of the portable player 11 is not maximum value.

Another preferred embodiment of the present invention will be described. In the present embodiment, a predetermined time since the main microcomputer 2 has made the transition to the low-power consumption state in S7 of FIG. 2 until the main microcomputer 2 makes the transition to the normal state to confirm the charging state of the portable player 11 is determined according to a charging information relating to the currently charged amount of the portable player 11 (for example, a charging rate). As used herein, the charging rate means the currently-charged amount with respect to a maximum charging capacity of the battery unit 7, that is, 100 × (currently charged amount) / (maximum charging capacity) (%). The microcomputer 12 of the portable player 11 always computes the charging rate, and both the charging rate and the charging state information are sent back to the sub-microcomputer 3. Or, the microcomputer 12 of the portable player 11 sends the currently charged amount and the maximum charging capacity to the battery charger 1 and the main microcomputer 2 computes the charging rate.

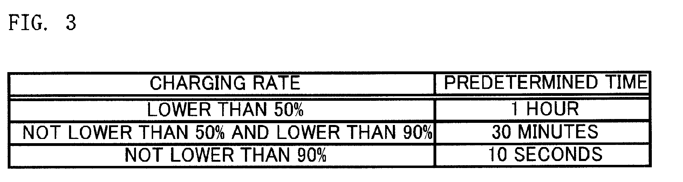

A predetermined time table of FIG. 3 is stored in the ROM 5. The predetermined time with respect to the charging rate is registered in advance in the predetermined time table. Referring to FIG. 3, the predetermined time is 1 hour when the charging rate is lower than 50%, the predetermined time is 30 minutes when the charging rate is not lower than 50% and is lower than 90%, the predetermined time is 10 seconds when the charging rate is not lower than 90%. That is, as the charging rate is increased, the predetermined time is shortened, and the main microcomputer 2 more frequently makes the transition from the low-power consumption state to normal state to confirm the charging state of the portable player 11. That is, for the high charging rate, the main microcomputer 2 needs to frequently confirm the charging state since the time required for completing the charging of the portable player 11 is short. For the low charging rate, since the time required for completing the charging of the portable player 11 is long, the main microcomputer 2 wastefully needs to make the transition to the normal state when the charging state is frequently confirmed, and the power consumption of the main microcomputer 2 is increased. Instead of storing the predetermined time table in the ROM 5, a conditional expression of the predetermined time table may be included in the program of the main microcomputer 2.

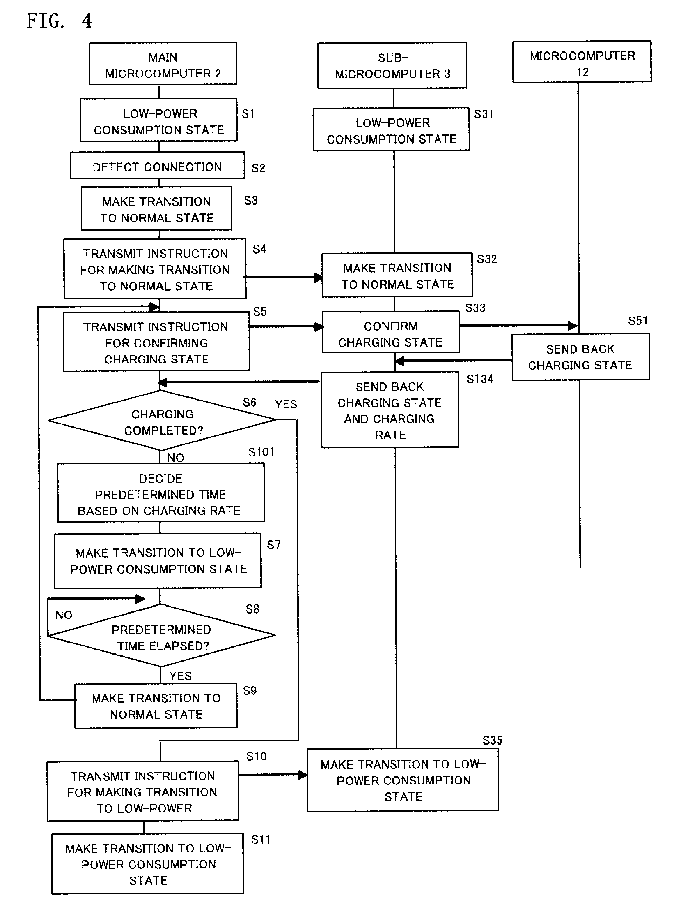

FIG. 4 is a flowchart illustrating the process of the present embodiment. In FIG. 4, the same process as that of FIG. 2 is designated by the same reference numeral, and the description thereof will not be given.

In S5, the main microcomputer 2 transmits the instruction for confirming the charging state of the portable player 11 to the sub-microcomputer 3. When receiving the instruction for confirming the charging state of the portable player 11 from the main microcomputer 2, the sub-microcomputer 3 transmits the inquiry about the charging state to the microcomputer 12 of the portable player 11 (S33). When receiving the inquiry about the charging state from the sub-microcomputer 3, the microcomputer 12 sends back the charging state information (during charging or completion of charging) and the charging rate to the sub-microcomputer 3 (S151). When receiving the charging state information and the charging rate from the microcomputer 12, the sub-microcomputer 3 sends back the charging state information and the charging rate to the main microcomputer 2 (S134).

When receiving the charging state information and the charging rate from the sub-microcomputer 3, the main microcomputer 2 determines whether the portable player 11 has completed charging based on the charging state information (S6). When the portable player 11 is still being charged (NO in S6), the main microcomputer 2 decides the predetermined time based on the received charging rate (S101). Particularly, for example, the main microcomputer 2 refers to the predetermined time table of FIG. 3, and the main microcomputer 2 decides that the predetermined time is 1 hour when the charging rate is lower than 50%, 30 minutes when the charging rate is not lower than 50% and is lower than 90%, and 10 seconds when the charging rate is not lower than 90%.

Thereafter, the main microcomputer 2 makes the transition from the normal state to the low-power consumption state (S7). When making the transition to the low-power consumption state, the main microcomputer 2 starts the count of the timer using the built-in timer circuit, and the main microcomputer 2 determines whether the predetermined time decided in S101 has elapsed since the main microcomputer 2 has made the transition to the low-power consumption state (S8). When the predetermined time has elapsed (YES in S8), the main microcomputer 2 makes the transition from the low-power consumption state to the normal state (S9). Then the flow returns to S5. The subsequent processes are identical to the processes of FIG. 2.

In the present embodiment, according to the charging rate of the portable player 11, the main microcomputer 2 decides the predetermined time until the main microcomputer makes the transition from the low-power consumption state to the normal state and confirms the charging state of the portable player 11. That is, for the high charging rate of the portable player 11, since the main microcomputer 2 more frequently confirms the charging state of the portable player 11, the increase of the power consumption can be prevented. When the main microcomputer 2 cannot recognize the completion of the charging of the portable player 11 although the portable player 11 has completed charging, the sub-microcomputer 3 wastefully maintains the normal state for a long period of time to increase the power consumption. On the other hand, for the low charging rate of the portable player 11, since the main microcomputer 2 does not frequently confirm the charging state, the time the main microcomputer 2 maintains the low-power consumption state can be lengthened to further reduce the power consumption.

Although the preferred embodiments of the present invention are described above, the present invention is not limited thereto. Instead of the charging rate, the predetermined time may be decided based on a remaining time to the completion of the charging. The remaining time to the completion of the charging is one of the charging information relating to the currently charged amount of the portable player 11. Instead of the charging rate, the predetermined time may be decided based on the currently charged amount of the portable player 11. The predetermined time is set shorter with decreasing remaining time to the completion of the charging. The present invention may be provided in a form of a program for causing the main microcomputer 2 or the sub-microcomputer 3 to execute the operation of the main microcomputer 2 or the sub-microcomputer 3 or a recording medium in which the program is recorded. The battery charger 1 may be incorporated in an audio apparatus such as an AV amplifier. The electronic device charged by the battery charger 1 may be a mobile telephone, a digital camera, or a portable game machine.

## Claims

1. A state discriminant apparatus that discriminates a charging state of an electronic device (11), comprising:
a first control unit (2); and
a second control unit (3),
wherein the first control unit (2) and the second control unit have a normal state and a low-power consumption state as operating states,
the first control unit (2) includes:
a means for causing the first control unit (2) to make a transition from the low-power consumption state to the normal state when a predetermined time has elapsed;
a transmitting means for transmitting an instruction for confirming the charging state of the electronic device (11) to the second control unit (3) in the normal state;
a determining means for determining whether the electronic device (11) has completed charging based on charging state information sent back from the second control unit (3); and
a means for causing the first control unit (2) to make the transition from the normal state to the low-power consumption state when the determining means has determined that the electronic device (11) is still being charged; and
the second control unit (3) includes:
a means for confirming the charging state of the electronic device (11) to send back the charging state information to the first control unit (2) in the normal state in response to the instruction for confirming the charging state of the electronic device (11) from the first control unit (2).

2. The state discriminant apparatus according to claim 1, wherein the first control unit (2) further comprises a means for determining whether a predetermined time has elapsed since a transition from the normal state to the low-power consumption state is made.

3. The state discriminant apparatus according to claim 1 or 2, wherein the first control unit (2) further comprises a means for causing the first control unit (2) to make the transition to the low-power consumption state after the transmitting means has transmitted to the second control unit (3) an instruction for making the transition to the low-power consumption state, when the determining means has determined that the electronic device (11) has completed charging.

4. The state discriminant apparatus according to any of claims 1 to 3, wherein the second control unit (3) further comprises a means for causing the second control unit (3) to make the transition from the normal state to the low-power consumption state in response to an instruction for making the transition to the low-power consumption state from the first control unit (2).

5. The state discriminant apparatus according to any of claims 1 to 4, wherein the second control unit (3) confirms a charging information relating to a currently charged amount of the electronic device (11) and sends the charging information to the first control unit (2),
the first control unit (2) further includes a means that decides the predetermined time based on the charging information received from the second control unit (3).

6. The state discriminant apparatus according to any of claims 1 to 5, wherein the state discriminant apparatus is a battery charger that is adapted to charge a battery unit (17) of the electronic device (11).

7. A method for discriminating a charging state of an electronic device (11) with a state discriminant apparatus (1) comprising a first control unit (2) and a second control unit (3), wherein the first control unit (2) and the second control unit have a normal state and a low-power consumption state as operating states,
the method comprising:
a step of causing the first control unit (2) to make a transition from the low-power consumption state to the normal state when a predetermined time has elapsed;
a step in which the first control unit (2) transmits an instruction for confirming the charging state of the electronic device (11) to the second control unit (3) in the normal state;
a step in which the second control unit (3) confirms the charging state of the electronic device (11) to send back the charging state information to the first control unit (2) in the normal state in response to the instruction for confirming the charging state of the electronic device (11) from the first control unit (2);
a step in which the first control unit (2) determines whether the electronic device (11) has completed charging based on charging state information sent back from the second control unit (3); and
a step of causing the first control unit (2) to make the transition from the normal state to the low-power consumption state when it has been determined that the electronic device (11) is still being charged.

8. The method according to claim 7, further comprising a step in which the first control unit (2) determines whether a predetermined time has elapsed since a transition from the normal state to the low-power consumption state is made.

9. The method according to claim 7 or 8, further comprising a step in which the first control unit (2) makes the transition to the low-power consumption state after an instruction for making the transition to the low-power consumption state has been transmitted to the second control unit (3), when it has been determined that the electronic device (11) has completed charging.

10. The method according to any of claims 7 to 9, further comprising a step in which the second control unit (3) makes the transition from the normal state to the low-power consumption state in response to an instruction for making the transition to low-power consumption state from the first control unit (2).

11. The method according to any of claims 7 to 10, further comprising:
a step in which the second control unit (3) confirms a charging information relating to the currently charged amount of the electronic device (11) and sends the charging information to the first control unit (2), and
a step in which the first control unit (2) decides the predetermined time based on the charging information received from the second control unit (3).
